Europäisches Patentamt

European Patent Office

Office européen des brevets

(19)

(11) **EP 0 818 920 A1**

(12) **EUROPEAN PATENT APPLICATION**

(43) Date of publication:
**14.01.1998 Bulletin 1998/03**

(51) Int Cl.6: **H04N 1/60**, H04N 9/64

(21) Application number: **97304973.7**

(22) Date of filing: **08.07.1997**

| | |
|---|---|
| (84) Designated Contracting States:<br>**AT BE CH DE DK ES FI FR GB GR IE IT LI LU MC NL PT SE**<br><br>(30) Priority: **10.07.1996 GB 9614488**<br><br>(71) Applicant: **Fujifilm Electronic Imaging Limited London NW3 6JH (GB)** | (72) Inventor: **Rayner, Robert Wilfred**<br>**Nr. Tring, Hertfordshire HP23 4LU (GB)**<br><br>(74) Representative: **Skone James, Robert Edmund**<br>**GILL JENNINGS & EVERY**<br>**Broadgate House**<br>**7 Eldon Street**<br>**London EC2M 7LH (GB)** |

(54) **Colour correction**

(57)     Colour correction apparatus comprising a colour processor (7) for correcting original digital data representing the colour component content of pixels of the image to data suitable for controlling an output device (6) by applying an algorithm to the original data. The algorithm involves the use of a set of previously defined and stored coefficients. The original digital data comprises a plurality of colour component values (RGB) which each define the intensity of a respective colour component for a respective pixel of the image. The algorithm comprises for each pixel carrying out the steps of

(1) ranking the colour component values for the pixel,
(2) assigning a colour quality to the pixel in accordance with the ranking of the colour component values,
(3) selecting one or more of the previously defined and stored coefficients in accordance with the assigned colour quality of the pixel, and
(4) correcting the original digital data for the pixel in accordance with the selected one or more coefficients.

A first frame store (3) for the original data; a second frame store (4) for storing data generated by the colour processor from the original data in the first frame store; and processing means for reviewing the data in the second frame store and, if any data values are unacceptable, for adjusting one or more of the stored coefficients of the colour processor.

Fig.3.

## Description

The invention relates to methods and apparatus for correcting or modifying colours of an image for the purposes of outputting the image.

Conventional input scanners and the like generate digital data defining the pixels of an image in a first colour space such as red, green, and blue (RGB) while conventional output scanners require the data to be supplied in terms of printing colour components such as cyan, magenta, yellow and black (CMYK). Conventional input scanners thus have a colour processor which corrects the data to a form suitable for output. One particular colour processor makes use of an algorithm in which firstly the colour components RGB or their complements CMY are ranked in order of saturation; the quality of the colour of the pixel is then determined i.e. its redness, yellowness etc.; and then a corrected or modified value for each colour component is generated by reference to the quality and multiplicative, previously defined, coefficients.

Problems can arise with this colour correction when handling particular types of image. If, for example, the coefficients have been set so that "average" or typical originals are correctly reproduced, then for certain over or under saturated originals, there will be a lack of tonal separation in the very saturated or very unsaturated colours respectively, which is undesirable. In the past, it has been necessary for a skilled operator to deal with this as described for example in EP-A-0310829 and US-A-5081529.

In accordance with a first aspect of the present invention there is provided colour correction apparatus comprising a colour processor for correcting original digital data representing the colour component content of pixels of an image to data suitable for controlling an output device by applying an algorithm to the original data, the algorithm involving the use of a set of previously defined and stored coefficients, wherein the original digital data comprises a plurality of colour component values which each define the intensity of a respective colour component for a respective pixel of the image, and wherein the algorithm comprises for each pixel carrying out the steps of

(1) ranking the colour component values for the pixel,
(2) assigning a colour quality to the pixel in accordance with the ranking of the colour component values,
(3) selecting one or more of the previously defined and stored coefficients in accordance with the assigned colour quality of the pixel, and
(4) correcting the original digital data for the pixel in accordance with the selected one or more coefficients;

a first frame store for the original data; a second frame store for storing data generated by the colour processor from the original data in the first frame store; and processing means for reviewing the data in the second frame store and, if any data values are unacceptable, for adjusting one or more of the stored coefficients of the colour processor.

This invention provides an automatic method and apparatus for adjusting the coefficients used by the colour processor until the finally processed image has an acceptable tonal separation between all its colours. This may be achieved by processing the image initially at a low resolution until the coefficients have been determined and then feeding the data at a desired higher resolution through the colour processor, for example by rescanning with the corrected coefficients. Operating at low resolution enables the image to be processed several times through the colour processor relatively rapidly and thus the coefficients can be adjusted in an iterative manner until all or at least a substantial percentage (e.g. 98%) of the resultant, processed colours are acceptable (neither over saturated or under saturated) following which the image can be processed at the desired high resolution.

Typically, the low resolution may be 256 x 256 pixels per square inch while the high resolution can be as required for output.

Typically, the first and second frame stores will be defined by separate memories although different parts of a common memory could be used.

The colour processor and processing means may be defined by separate components or by a common microprocessor.

Where the data stored in the first frame store is at low resolution, this may have been obtained by directly scanning an original at the low resolution or by generating a low resolution version of the image from a previously scanned high resolution image which has been stored in another store. Further, the whole of a picture or transparency need not be scanned. The operator could arrange for just the most saturated region to be interrogated.

The step of adjusting the coefficients can involve adjustment of a selected group of the coefficients or instead all the coefficients can be adjusted by substantially the same predetermined amount or percentage. Adjusting each coefficient by substantially the same predetermined percentage enables colour saturation to be adjusted with the minimum of hue change.

In accordance with a second aspect of the present invention there is provided a method of correcting original digital data representing the colour component content of pixels of an image to data suitable for controlling an output device, wherein the original digital data comprises a plurality of colour component values which each define the intensity of a respective colour component for a respective pixel of the image, the method comprising for each pixel:

a) ranking the colour component values for the pixel,
b) assigning a colour quality to the pixel in accordance with the ranking of the colour component values,
c) selecting one or more previously defined and stored coefficients in accordance with the assigned colour quality of the pixel,
d) correcting the original digital data for the pixel in accordance with the selected one or more coefficients;
e) reviewing the data in the second frame store and, if any data values are unacceptable, adjusting one or more of the stored coefficients by a predetermined amount or percentage; and
f) repeating step d) and e) until all the data values are acceptable.

In one example the colour quality of a pixel is defined by the colour area of a colour circle (such as a cyan, violet, magenta, red, yellow, green colour circle) which contains the pixel. Neutral pixels (ie. pixels lying at the centre of the colour circle) are typically not corrected. Where correction is performed on CMY colour component values there are typically 18 previously defined and stored coefficients (six for each component). Where correction is performed on CMYK colour component values there are typically 24 previously defined and stored coefficients (six for each component).

An example of a method and apparatus according to the invention will now be described with reference to the accompanying drawings, in which:-

Figure 1 is a block diagram of the apparatus;
Figure 2 is a functional block diagram illustrating the functional arrangement of the apparatus shown in Figure 1;
Figure 3 is a flow diagram illustrating operation of the apparatus shown in Figure 1;
Figure 4 is an example of a histogram which is analyzed to determine black and white points;
Figure 5 is an example of a tone curve;
Figure 6 illustrates the tonal compression effect of the tone curve illustrated in Figure 5; and
Figure 7 is a colour circle showing active areas of correction signals.

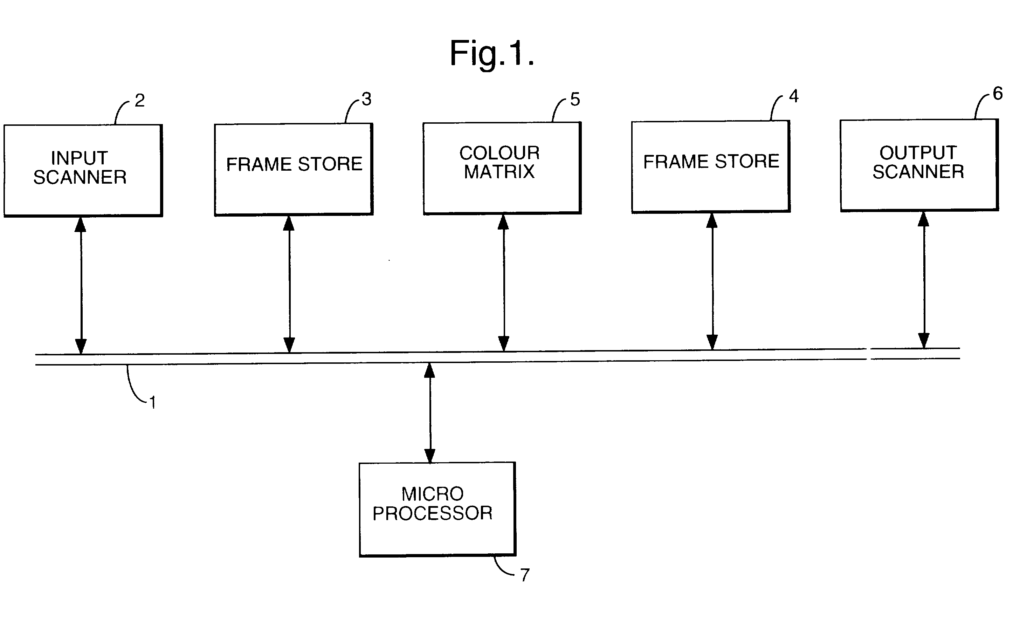

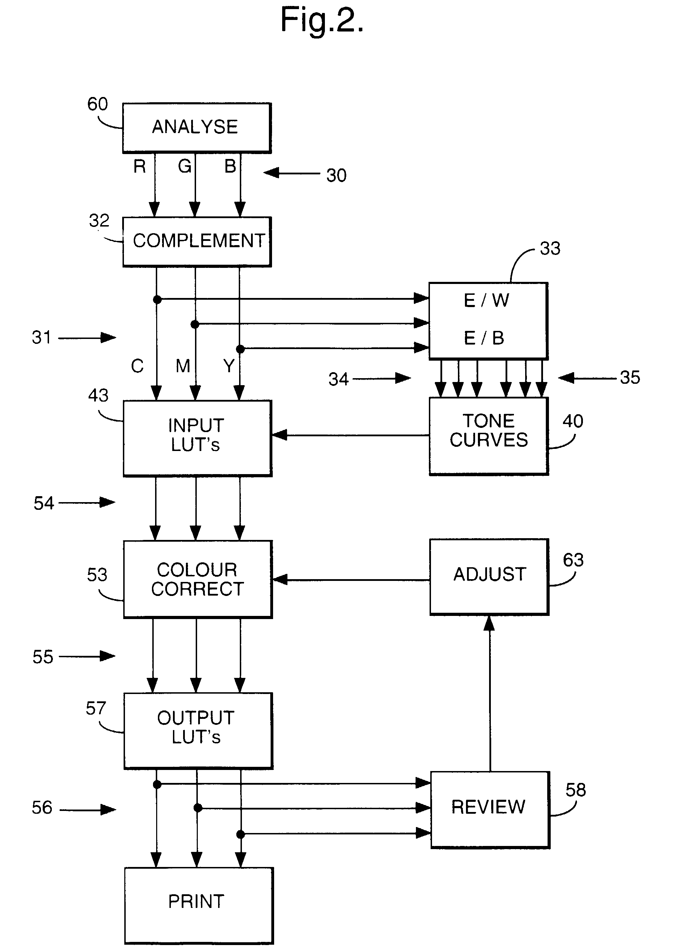

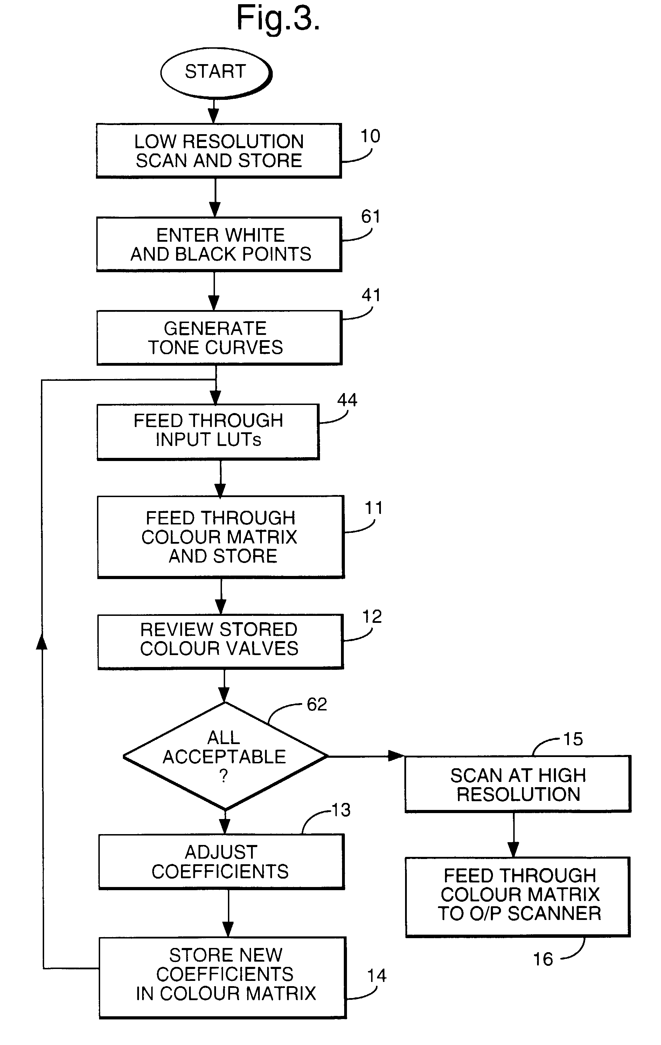

The apparatus shown in Figure 1 comprises a data/ control bus 1 to which are connected an input scanner 2, such as the Crosfield Magnascan 600 series, frame stores 3,4, a colour matrix processor 5, an output scanner 6 such as a colour printer or Electronic Dot generator, and a microprocessor 7. Figure 2 is a functional block diagram illustrating the functions performed by the microprocessor 7, and Figure 3 is a flow diagram illustrating the main process steps carried out by the apparatus.

In operation, referring to Figures 1-3, a transparency containing an image to be scanned is mounted on the input scanner 2 and the image is scanned at 60 (step 10) at a low resolution, for example 256 x 256 pixels covering the image. For each pixel the input scanner 2 generates RGB original density values 30 defining the original density of each colour component for that pixel. These original density values 30 are either fed directly to the frame store 3 or could be edited in a conventional manner by a means not shown. Ultimately, however, the frame store 3 contains RGB data for each pixel of the low resolution version of the image.

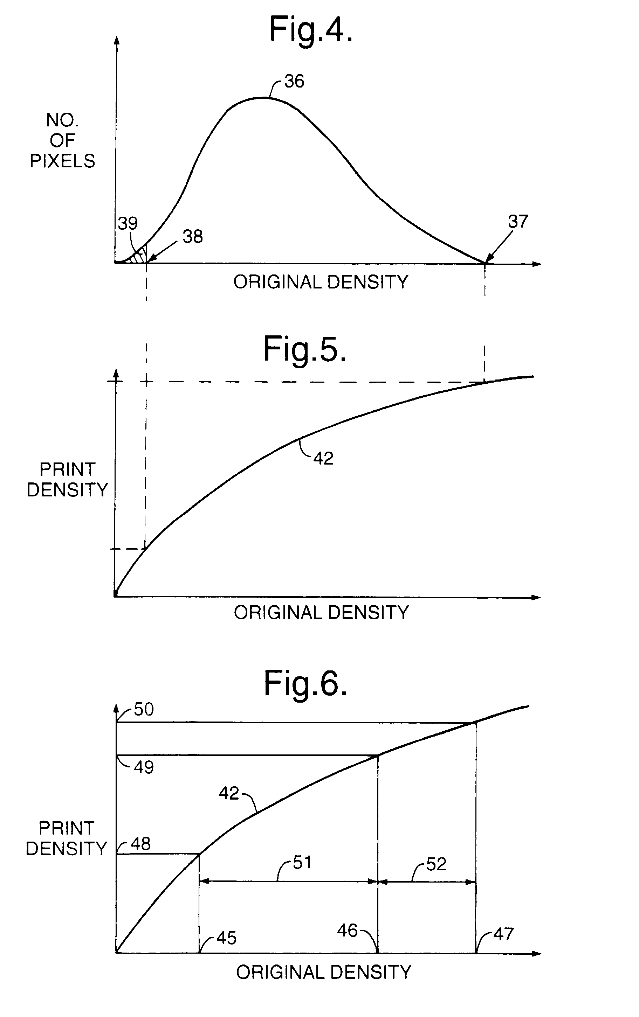

The data in the frame store 3 is then converted into cyan, magenta and yellow (CMY) data 31 by complementing the RGB data 30 at 32 (ie. C=1-R, M=1-G and Y=1-B) and the CMY data 31 is analyzed at 33 (step 61) to determine the densities of each channel which correspond to the channel densities at the "enter black" and "enter white" points. The "enter white" and "enter black" points may be determined manually or automatically. That is, a user can review the image on a monitor (not shown) and select one of the lighter pixels of the image (although generally not the lightest) as a white point and a darker one of the pixels as a black point. The C, M and Y data values for the selected white and black pixels then define the enter white values 34 ($C_w,M_w,Y_w$) and enter black values 35 ($C_b,M_b,Y_b$). Alternatively the enter white values 34 and enter black values 35 can be determined automatically by generating and analysing a histogram 36 (Figure 4) for each channel. In this case the microprocessor 7 selects the highest original density value with a single pixel (ie. the far right-hand point 37 of the histogram 36) as the enter black value, and selects an enter white value 38 where the number of pixels 39 having a lower density than the enter white value is 0.02% of the total number of pixels.

The enter white and enter black values 34,35 are then used to generate tone curves at 40 (step 41) an example of which is illustrated in Figure 5. A tone curve 42 is generated by fitting a curve of predetermined form to the two data points provided by the enter white value 38 and the enter black value 37. Typically the curve is fitted by setting the white point 38 at 5% print density and the black point 37 at 95% print density. The tone curve 42 for each colour channel is then loaded into a respective input look-up table 43 and the data 31 is passed through the input look-up tables (step 44) to generate print density values 54.

The form of the tone curve 42 results in tonal compression as illustrated in Figure 6. This compresses the input range to the (usually) more limited print density range available on paper. In this illustrative example a highly saturated pixel having C,M and Y values 45-47 is passed through the input look-up tables 43 to generate print density values 48-50. In this example the tone curve for each colour channel is the same, although in general they may be different. The tone curves are set to obtain the correct reproduction along the "grey axis" which forms the diagonal of a colour cube. It can be seen that the tone curve 42 compresses the colour difference values 51,52. This tonal compression can be too severe for some colours and this effect is partly offset in coloured directions by colour correction function 53, which also corrects for ink imperfections.

The data 54 in the frame store 3 is fed to the colour matrix processor 5 (indicated at 53 in Figure 2) which applies a colour conversion algorithm to the data of each pixel (step 11) as described below. The algorithm described below also takes into account a black signal which can be generated by the microprocessor 7 from the CMY signals 54 in a conventional way.

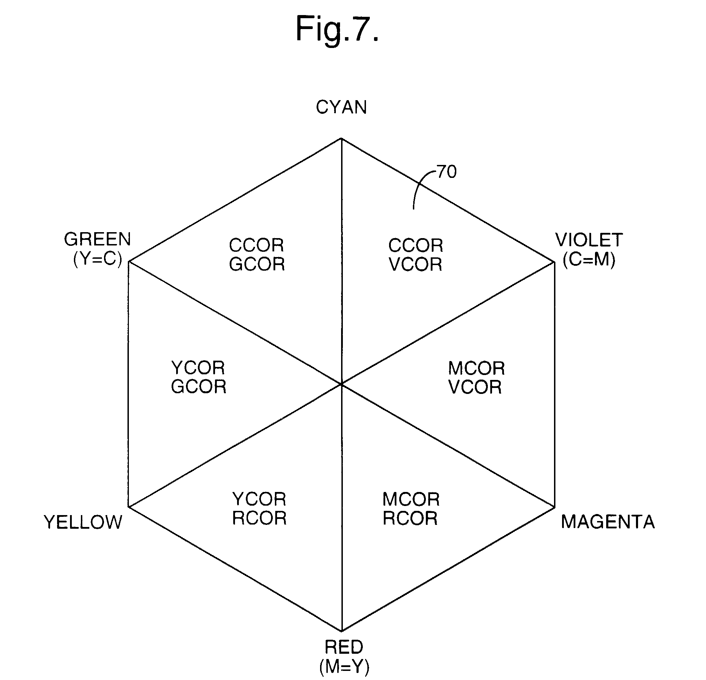

This algorithm applies colour correction to the input values 54 (YEL3, MAG3, CYN3 and BLAK3) and puts the colour corrected values 55 into YEL4, MAG4, CYN4 and BLAK4. Initially, the input colours 54 are compared with one another to determine which of the six possible colour areas illustrated in Figure 7 the input lies in. The conditions are as follows:-

| C > M > Y | CYAN | to VIOLET | region |
|-----------|---------|-----------|--------|
| C > Y > M | CYAN | to GREEN | region |
| M > C > Y | MAGENTA | to VIOLET | region |
| M > Y > C | MAGENTA | to RED | region |
| Y > M > C | YELLOW | to RED | region |
| Y > C > M | YELLOW | to GREEN | region |

Six colour area signals (RCOR etc.) are generated which indicate what sort of colour is represented by the current pixel triple (Y, M, C):-

$$RCOR = P[(y - c) + N(m - y)] = \text{"redness"}$$

$$YCOR = P[(y - c) + N(c - m)] = \text{"yellowness"}$$

$$GCOR = P[(c - m) + N(y - c)] = \text{"greenness"}$$

$$CCOR = P[(c - m) + N(m - y)] = \text{"cyan-ness"}$$

$$VCOR = P[(m - y) + N(c - m)] = \text{"violet-ness"}$$

$$MCOR = P[(m - y) + N(y - c)] = \text{"magenta-ness"}$$

The function P[X] signifies that only positive correction signals are allowed - correction is cleared to zero if negative, i.e. $P\{X\} = \max(X, O)$.

Similarly, the function N[X] signifies that only negative correction signals are allowed - correction is cleared to zero if positive, i.e. $N[X] = \min(X, O)$.

An alternative way of writing this is:

$$RCOR = P[\min(m, y) - c] = \text{"redness"}$$

$$YCOR = P[y - \max(c, m)] = \text{"yellowness"}$$

$$GCOR = P[min(y, c) - m] = \text{"greenness"}$$

$$CCOR = F[c - max(m, y)] = \text{"cyan-ness"}$$

$$VCOR = P[min(c, m) - y] = \text{"violet-ness"}$$

$$MCOR = P(m - max(y, c)] = \text{"magenta-ness"}$$

With reference to Figure 7, taking for example the first case, C > M > Y signifies that the input colour lies in the CYAN to VIOLET sector 70 of the colour circle. In this case, the CYAN correction signal (labelled CCOR) represents the "cyan-ness" of the colour and is given by the difference (C-M). The VIOLET correction signal representing the "violetness" of the colour, VCOR, is given by (M-Y).

It should be noted that a maximum of two of the colour area signals can be non-zero for any one combination of the three input signals.

Each region has associated with it one correction coefficient for each colour component leading to a total of 18 such coefficients (24 if black is also taken into account). The correction coefficients are previously defined and stored by analysing a set (typically 20-50) of transparencies carrying different images, and determining a set of coefficients which results in satisfactory reproduction of each image.

The yellow coefficients for example are:-

| YCOEF(R) | yellow channel in RED | areas |
|----------|----------------------|-------|
| YCOEF(Y) | yellow channel in YELLOW | areas |
| YCOEF(G) | yellow channel in GREEN | areas |
| YCOEF(C) | yellow channel in CYAN | areas |
| YCOEF(V) | yellow channel in VIOLET | areas |
| YCOEF(M) | yellow channel in MAGENTA | areas |

Corresponding magenta, cyan and black coefficients are also stored. The total correction made to the yellow channel, for example, may be expressed by the equation:-

$$YEL4 = YEL3 + RCOR*YCOEF(R) + YCOR*YCOEF(Y) +$$

$$GCOR*YCOEF(G)$$

$$+ CCOR*YCOEF(C) + VCOR*YCOEF(V) + MCOR*YCOEF(M)$$

with similar equations for other channels.

In the step 11, the appropriate set of correction coefficients is applied to the input values 54 by colour correction function 53. The corrected colour component values 55 are then stored in the frame store 4.

The print density colour values 55 are then converted into dot percentage values 56 (appropriate for printing) by output look-up tables 57 and the dot percentage values 56 are stored in the frame store 4.

The microprocessor 7 then reviews at 58 the 256 x 256 sets of dot percentage values 56 in the frame store 4 (step 12) and determines (step 62) whether any of the pixels contain a colour component value which is outside a previously set acceptable range appropriate to the output scanner 6. Typically, the operator will set a "white" point and optionally also a "black" point as dot percentage values e.g. 5% and 95% respectively. Conventionally, if a colour component value in the frame store 4 falls outside this range but within 0% to 100%, it will be reproduced unaltered. Values outside the range 0-100% will be printed with a value at the end of the range with the result that there will be no tonal separation between that pixel colour and another pixel which actually has a 0% or 100% colour component value, i.e. once saturation has been reached all values are limited resulting in loss of image information.

In contrast, with the invention, if at least one colour component value is not acceptable (for instance if it has a dot percentage value less than 0% or greater than 100%) then the microprocessor 7 will generate at 63 (step 13) a new set of coefficients. This may involve simply recalculating one or two coefficients in the area of the over saturated or under saturated colour component or involve a recalculation of all the coefficients in which they are scaled or modified by a similar amount. If hue is to be maintained, then each of the 18 (or 24) coefficients is increased or decreased by substantially the same predetermined percentage. The new coefficients are then stored by the microprocessor 7 in the colour matrix processor 5,53 (step 14) and processing returns to step 11. Thus, the data in the frame store 3 is again processed through the colour matrix colour processor 5 to the frame store 4 and the contents of the frame store 4 are reviewed and further changes, if necessary, are made to the correction coefficients.

Finally, once all the colour values are acceptable (e.g. all lie between 0% and 100% dot), the original image is rescanned by the scanner 2 at high resolution (step 15) and the high resolution data is fed through the colour matrix processor 5 where it is converted to CMYK and then fed to the output scanner 6 (step 16) for printing.

## Claims

1. Colour correction apparatus comprising a colour processor for correcting original digital data representing the colour component content of pixels of an image to data suitable for controlling an output device by applying an algorithm to the original data the algorithm involving the use of a set of previously defined and stored coefficients, wherein the original digital data comprises a plurality of colour component values which each define the intensity of a respective colour component for a respective pixel of the image and wherein the algorithm comprises for each pixel carrying out the steps of

   (1) ranking the colour component values for the pixel,
   (2) assigning a colour quality to the pixel in accordance with the ranking of the colour component values,
   (3) selecting one or more of the previously defined and stored coefficients in accordance with the assigned colour quality of the pixel, and
   (4) correcting the original digital data for the pixel in accordance with the selected one or more coefficients;

   a first frame store for the original data; a second frame store for storing data generated by the colour processor from the original data in the first frame store; and processing means for reviewing the data in the second frame store and, if any data values are unacceptable, for adjusting one or more of the stored coefficients of the colour processor.

2. A method of correcting original digital data representing the colour component content of pixels of an image to data suitable for controlling an output device, wherein the original digital data comprises a plurality of colour component values which each define the intensity of a respective colour component for a respective pixel of the image, the method comprising for each pixel:

   a) ranking the colour component values for the pixel,
   b) assigning a colour quality to the pixel in accordance with the ranking of the colour component values,
   c) selecting one or more previously defined and stored coefficients in accordance with the assigned colour quality of the pixel,
   d) correcting the original digital data for the pixel in accordance with the selected one or more coefficients;
   e) reviewing the data in the second frame store and, if any data values are unacceptable, adjusting one or more of the stored coefficients by a predetermined amount or percentage; and
   f) repeating step d) and e) until all the data values are acceptable.

3. A method according to claim 2, wherein the image is processed initially at a low resolution until the coefficients have been determined and then, following step c), the data is fed at a desired higher resolution through the colour processor.

4. A method according to claim 2 or claim 3, wherein the step of adjusting the coefficients comprises adjusting all the coefficients so as to maintain the hue of the pixel.

5. A method according to claim 4 wherein each coefficient is adjusted in step e) by substantially the same predetermined percentage.

6. A method according to any of claims 2 to 5 wherein the colour components are red, green and blue.

7. A method according to any of claims 2 to 6 wherein the data suitable for controlling an output device comprises cyan, magenta and yellow colour data.

8. A method according to any of claims 2 to 7, wherein the output device comprises a printer.

9. Apparatus according to claim 1, adapted to carry out a method according to any of claims 2 to 8.

# Fig.1.

```
┌─────────┐   ┌─────────┐   ┌─────────┐   ┌─────────┐   ┌─────────┐
│  INPUT  │   │  FRAME  │   │ COLOUR  │   │  FRAME  │   │ OUTPUT  │
│ SCANNER │   │  STORE  │   │ MATRIX  │   │  STORE  │   │ SCANNER │
└────┬────┘   └────┬────┘   └────┬────┘   └────┬────┘   └────┬────┘
     │ 2          │ 3          │ 5          │ 4          │ 6
     ↕            ↕            ↕            ↕            ↕
```

MICRO
PROCESSOR

EP 0 818 920 A1

# Fig.2.

# Fig.3.

START

LOW RESOLUTION
SCAN AND STORE — 10

↓

ENTER WHITE
AND BLACK POINTS — 61

↓

GENERATE
TONE CURVES — 41

↓

FEED THROUGH
INPUT LUTs — 44

↓

FEED THROUGH
COLOUR MATRIX
AND STORE — 11

↓

REVIEW STORED
COLOUR VALVES — 12

↓

ALL
ACCEPTABLE
? — 62

→ SCAN AT HIGH
RESOLUTION — 15

↓

FEED THROUGH
COLOUR MATRIX
TO O/P SCANNER — 16

ADJUST
COEFFICIENTS — 13

↓

STORE NEW
COEFFICIENTS
IN COLOUR MATRIX — 14

# Fig.4.

NO.
OF
PIXELS

36

39
38
37

ORIGINAL DENSITY

# Fig.5.

PRINT
DENSITY

42

ORIGINAL DENSITY

# Fig.6.

50

49

42

PRINT
DENSITY

48

51

52

45

46

47

ORIGINAL DENSITY

# Fig.7.

CYAN

GREEN
(Y=C)

VIOLET
(C=M)

70

CCOR
GCOR

CCOR
VCOR

YCOR
GCOR

MCOR
VCOR

YCOR
RCOR

MCOR
RCOR

YELLOW

MAGENTA

RED
(M=Y)

| | **European Patent Office** | **EUROPEAN SEARCH REPORT** | **Application Number** EP 97 30 4973 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 677 972 A (MATSUSHITA ELECTRIC INDUSTRIAL CO.) * column 15, line 55 - column 19, line 57 * --- | 1-6,9 | H04N1/60 H04N9/64 |
| A | EP 0 413 557 A (SONY CORPORATION) * the whole document * --- | 1,2,9 | |
| A | EP 0 198 692 A (SONY CORPORATION) --- | 1,2,4,5 | |
| A | EP 0 677 971 A (MATSUSHITA ELECTRIC INDUSTRIAL CO.) ----- | | |
| | | | **TECHNICAL FIELDS SEARCHED** (Int.Cl.6) H04N |

The present search report has been drawn up for all claims

| Place of search | Date of completion of the search | Examiner |
|---|---|---|
| THE HAGUE | 29 September 1997 | De Roeck, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13